# EUROPÄISCHE PATENTSCHRIFT

(11) **EP 1 591 644 B1**
(45) Veröffentlichungstag und Bekanntmachung des Hinweises auf die Patenterteilung: **09.02.2011**
(21) Anmeldenummer: 04024724.9
(22) Anmeldetag: 16.10.2004
(51) Int. Cl.: F02C 7/143, F01K 21/04, F01K 23/10, F04D 25/02

(54) **Vorrichtung zur Ausnutzung der Abwärme von Verdichtern**
Device for the exploitation of waste heat from compressors
Dispositif pour l'utilisation de la chaleur perdue par les compresseurs

(30) Priorität: 27.04.2004 DE 102004020753
(43) Veröffentlichungstag der Anmeldung: 02.11.2005
(73) Patentinhaber: MAN Diesel & Turbo SE, 86153 Augsburg (DE)
(72) Erfinder: Gericke, Bernd, 51067 Köln (DE); Woelk, Gerd-Ulrich, Dr., 46147 Oberhausen (DE); Kuzmanovski, Pavle, 13503 Berlin (DE)
(74) Vertreter: Krause, Thomas

(56) Entgegenhaltungen:
- EP-A- 0 597 305
- DE-A1- 3 224 577
- DE-A1- 10 155 508
- GB-A- 2 307 277
- US-A- 4 342 201
- US-A1- 2004 035 117

## Beschreibung

Die Erfindung betrifft eine Vorrichtung zur Ausnutzung der Abwärme von einem oder mehreren hintereinander geschalteten Verdichtern mit den Merkmalen des Anspruchs 1.

Bei einem Verdichtungsprozess kann durch die Zwischenkühlung des verdichteten Mediums die Antriebsleistung der Verdichter erheblich reduziert werden. Üblicherweise wird dabei bisher die abzuführende Zwischenkühlerwärme ungenutzt in die Atmosphäre geleitet.

Aus der EP 0 597 305 B2 ist eine kombinierte Gas- und Dampf-Kraftanlage mit einem zweistufigen Verdichter zur Verdichtung der der Brennkammer der Gasturbine zugeführten Verbrennungsluft bekannt. Zwischen den beiden Verdichterstufen ist ein Zwischenkühler angeordnet, dessen Wärmeaustauschflächen in den Wasser-Dampf-Kreislauf des der Gasturbine nachgeschalteten Abhitzekessels eingebunden sind. Dem Zwischenkühler wird Speisewasser zugeführt, dessen Druck zuvor durch eine Druckerhöhungspumpe erhöht wurde. Das in dem Zwischenkühler erhitzte Speisewasser wird einer Dampftrommel zugeführt, in der es teilweise ausdampft. Der so entstehende Dampf wird in den Überhitzer und das Wasser wird in den Mischvorwärmer eingeleitet. Das Prinzip der Wärmeauskopplung erfolgt damit durch Nachverdampfung des umgewälzten Kühlwassers in der Trommel. Auf diese Weise wird die Höhe der Wärmeauskopplung durch den jeweiligen Dampfdruck in der Trommel stark beeinflusst.

Die aus der EP 0 597 305 B2 bekannte Kombianlage mit einer Ausnutzung der Verdichterabwärme benötigt außer der ohnehin vorhandenen Speisewasserpumpe eine zusätzliche Druckerhöhungspumpe für den Kühlkreislauf. Die Ausnutzung der Verdichterabwärme erfolgt an dem der Anlage eigenen Medium, nämlich der verdichteten Verbrennungsluft. Es wird lediglich die Verdichterwärme ausgenutzt, die in dem Zwischenkühler anfällt.

Anders als bei dem Stand der Technik gemäß der EP 0 597 305 B2, bei dem der reine Stromerzeugungsprozess betrachtet wird, geht es bei der vorliegenden Erfindung um die Integration eines Stromerzeugungsprozesses in industrielle Verdichterprozesse, z.B. in der Petrochemie oder bei der Förderung von Gas durch Pipelines.

Die US 4,342,201 zeigt eine Vorrichtung, bei der zwischen je zwei Verdichtern ein Zwischenkühler und nach dem letzten Verdichter ein Nachkühler angeordnet ist.

Aus der DE-OS 32 24 577 ist ebenfalls eine Vorrichtung bekannt, bei der zwischen zwei Verdichtern ein Zwischenkühler und nach dem letzten Verdichter ein Nachkühler angeordnet ist.

Die DE 101 55 508 A1 und die GB 2 307 277 A zeigen nur einen Verdichter. Eine Überhitzung von Dampf für eine Dampfturbine findet durch die Abgase einer Gasturbine statt.

Die US 2004/0035117 A1 zeigt zwei von einer Gasturbine angetriebene Verdichter, denen je ein Kühler nachgeschaltet ist.

Der Erfindung liegt die Aufgabe zugrunde, bei einer gattungsgemäßen Vorrichtung die Verdichterabwärme effizienter nutzbar zu machen.

Die Aufgabe wird bei einer gattungsgemäßen Vorrichtung erfindungsgemäß durch die Merkmale des Anspruchs 1 gelöst. Vorteilhafte Ausgestaltungen der Erfindung sind Gegenstand der Unteransprüche.

Die erfindungsgemäße Vorrichtung kann bei motorisch angetriebenen Verdichteranlagen angewendet werden. Bei elektromotorisch angetriebenen Verdichtern ergibt sich eine Reduzierung des anrechenbaren Leistungsbezuges aus dem Netz, da der von der Dampfturbine angetriebene Generator Energie ins Netz liefern kann.

Mehrere Ausführungsbeispiele der Erfindung sind in der Zeichnung dargestellt und werden im Folgenden näher erläutert. Es zeigen:
- Fig. 1: das Schema einer Verdichteranlage, deren Verdichter durch eine Gasturbine angetrieben sind und
- Fig. 2: das Schema einer elektromotorisch angetriebenen Verdichteranlage mit einer Ausnutzung der Verdichterabwärme gemäß der Erfindung.

Die dargestellte Verdichterstation besteht aus zwei hintereinander geschalteten Verdichtern 1, 2 oder Verdichterstufengruppen. Die Verdichterstation dient zur Verdichtung von Gas in einer petrochemischen Anlage oder in einer Zwischenstation einer Pipeline zur Förderung von Gas oder ähnlichen Anwendungen. Zur Reduzierung der Antriebsleistung für die Verdichter 1, 2 ist in dem Gasstrom zwischen den Verdichtern 1, 2 ein Zwischenkühler 3 und zur Begrenzung der Gastemperatur ist hinter dem zweiten Verdichter 2 in der zu einem Endverbraucher führenden Leitung 4 ein Nachkühler 5 angeordnet. Der Zwischenkühler 3 und der Nachkühler 5 sind mit Wärmeaustauschflächen 6, 7 versehen. Es können auch mehr als zwei Verdichter oder Verdichterstufengruppen in der Verdichterstation vorgesehen werden, wobei jeweils zwischen zwei Verdichtern ein Zwischenkühler 3 und hinter dem letzten Verdichter der Nachkühler 5 angeordnet ist.

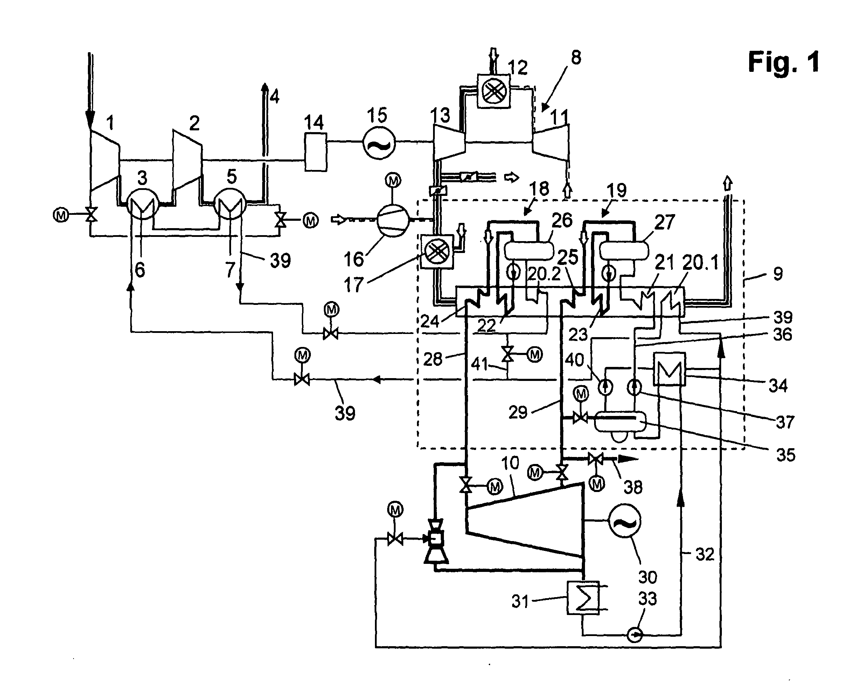

Die in der Fig. 1 dargestellte Verdichterstation, die nicht beansprucht wird, wird durch eine Gasturbinenanlage 8 angetrieben, der ein Abhitzekessel 9 in Verbindung mit einer Dampfturbine 10 nachgeschaltet ist. Die Gasturbinenanlage 8 besteht aus einem Brennluftverdichter 11, einer Brennkammer 12 und der eigentlichen Gasturbine 13. Die Ausgangswelle der Gasturbine 13 ist über ein Getriebe 14 mit den Verdichtern 1, 2 gekoppelt. Auf der Ausgangswelle der Gasturbine 13 ist ein Gasturbinengenerator 15 angeordnet, der elektrische Energie in das werkseigene oder in das öffentliche Stromnetz liefert. Bei dem Einsatz von Gasturbinen in der Leistungsklasse von 10 - 25 MW können die notwendigen Gesamt-Antriebsleistungen der Verdichter 1, 2 nur über höhere Leistungen der Dampfturbine 10 und damit durch erhöhte Feuerungstemperaturen im Abhitzekessel 9 erreicht werden. In diesem Fall sind die Gasturbine 13 und die Dampfturbine 10 als Einwellenstrang ausgebildet. Aus Gründen einer vereinfachten Darstellung ist ein solcher Einwellenstrang nicht gezeigt.

Im Abgasstrom kann hinter der Gasturbine 13 vorteilhafterweise eine mit Erdgas betriebene Zusatzfeuerung 17 mit einem Frischlüfter 16 vorgesehen werden. Die Regelung der Anlage erfolgt bei dem oben genannten Einwellenstrang ausschließlich über die Zusatzfeuerung, wodurch höchste Flexibilität bei der Teillastfahrweise und bei sich ändernden Ansaugbedingungen der Verdichter 1, 2 erreicht wird. Ist die Gasturbinen-Antriebsleistung für die Verdichter 1 und 2 ausreichend, so wird der Dampfturbinenkreislauf zur reinen Stromerzeugung oder als Kraft-Wärme-Kopplungs-Anlage genutzt. Über die installierte Zusatzfeuerung 17 und über den Frischlüfter 16 können bei entsprechender Gasturbinen-Teillast oder im Falle eines Schnellschlusses der Gasturbine 13 die Bedingungen des Dampfturbinen-Kreislaufes konstant gehalten werden. Bei einer Ausführung der Anlage als Einwellenstrang mit der oben genannten Aufgabenstellung kann der in Fig. 1 gezeigte Gasturbinengenerator als Motor/Generator-System ausgebildet werden. Im Falle des Ausfalles der Dampfturbine 10 und der Gasturbine 13 kann die notwendige Antriebsleistung der Verdichter 1, 2 aus dem Netz bereitgestellt werden. Dann arbeitet das Motor/Generator-System im sogenannten Motorbetrieb.

Darüber hinaus steigt der elektrische Wirkungsgrad des Gesamtprozesses mit sinkender Last an, da der Gasturbinenanteil an der Gesamtleistung höher wird.

Der Abhitzekessel 9 ist als Zweidruckkessel mit oder ohne Brennkammerberohrung konzipiert. Er enthält, wie in Fig. 1 schematisch dargestellt, einen Hochdruckteil 18 und einen Niederdruckteil 19, die jeweils einen Speisewasservorwärmer 20, 21, einen Verdampfer 22, 23 und einen Überhitzer 24, 25 aufweisen. Der Speisewasservorwärmer 20 des Hochdruckteiles 18 setzt sich aus einem ersten Speisewasservorwärmer 20.1 und einem zweiten Speisewasservorwärmer 20.2 zusammen. Die jeweiligen Speisewasservorwärmer 20.2, 21, Verdampfer 22, 23 und Überhitzer 24, 25 stehen jeweils mit einer außen liegenden Dampftrommel 26, 27 in Verbindung, wenn diese Komponenten im Naturumlauf oder im Zwangumlauf betrieben werden.

Der Überhitzer 24 des Hochdruckteiles 18 ist über eine Hochdruckdampfleitung 28 mit dem Eingangs- oder Hochdruckteil der Dampfturbine 10 und der Überhitzer 25 des Niederdruckteiles 19 ist über eine Niederdruckdampfleitung 29 mit dem Niederdruckteil der Dampfturbine 10 verbunden. Die Dampfturbine 10 treibt in diesem Ausführungsbeispiel einen Generator 30 zur Energieerzeugung an.

Der Austritt der Dampfturbine 10 ist mit einem Kondensator 31 verbunden. An den Kondensator 31 ist eine Kondensatleitung 32 angeschlossen, in der eine Kondensatpumpe 33 angeordnet ist, die über einen Wasser/Wasser/Wärmetauscher 34 zu einem Entgaser 35 geführt ist. Der Entgaser 35 ist über eine Niederdruckspeisewasserleitung 36, in der eine Niederdruckspeisewasserpumpe 37 angeordnet ist, mit dem Speisewasservorwärmer 21 des Niederdruckteiles 19 des Abhitzekessels 9 verbunden.

Die Entgasung des Kondensats erfolgt durch Niederdruckdampf aus dem Niederdruckteil 19 des Abhitzekessels 9. Ein weiterer Teil des Niederdruckdampfes kann über eine von der Niederdruckdampfleitung 29 abzweigende Zweigleitung 38 einem externen Verbraucher vorteilhafterweise zur Fernwärmeversorgung, zur Brennstoffvorwärmung oder als Prozessdampf zugeführt werden.

Um die in dem Zwischenkühler 3 und dem Nachkühler 5 anfallenden Abwärmepotentiale nutzbringend zu verwerten, sind die Wärmeaustauschflächen 6, 7 des Zwischenkühlers 3 und des Nachkühlers 5 in den Wasser-Dampf-Kreislauf des der Gasturbine 13 nachgeschalteten Abhitzekessels 9 eingebunden. Dazu ist an den Entgaser 35 eine Hochdruckspeisewasserleitung 39 angeschlossen, in der eine Hochdruckspeisewasserpumpe 40 angeordnet ist. Die Hochdruckspeisewasserleitung 39 ist durch den Wasser/Wasser/Wärmetauscher 34 hindurchgeführt und an den ersten Speisewasservorwärmer 20.1 des Hochdruckteiles 18 des Abhitzekessels 9 angeschlossen, der in dem Bereich des Austrittes des Abhitzekessels 9 angeordnet ist, an dem das Turbinenabgas seine niedrigste Temperatur erreicht hat. In dem außerhalb des Abhitzekessels 9 liegenden Wasser/Wasser-Wärmetauscher 34 wird die Temperatur des Speisewassers an dem Eintritt in den ersten Speisewasservorwärmer 20.1 durch das Kondensat so weit abgesenkt, dass die Abgastemperatur hinter dem Abhitzekessel 9 noch weiter reduziert werden kann. Der erste Speisewasservorwärmer 20.1 stellt in diesem Zusammenwirken eine zusätzliche Wärmesenke am kalten Ende des Abhitzekessels 9 dar. Eine solche Wärmesenke ist zur Erreichung einer wirtschaftlichen Gasaustrittstemperatur notwendig, weil anderenfalls die Nutzung der externen Abwärme der Verdichter 1, 2 zu einer verminderten Abwärmenutzung der Turbinenabgase bei Vermeidung einer Vorverdampfung in dem zweiten, im heißeren Teil des Abhitzekessels 9 liegenden Speisewasservorwärmer 20.2 des Hochdruckteiles 18 führen würde.

Von dem am kalten Ende des Abhitzekessels 9 angeordneten ersten Speisewasservorwärmer 20.1 ist die Hochdruckspeisewasserleitung 39 zu der Wärmetauscherfläche 6 des Zwischenkühlers 3 und von dort zu der Wärmetauscherfläche 7 des Nachkühlers 5 weitergeführt. Im Anschluss an den Nachkühler 5 verbindet die Hochdruckspeisewasserleitung 39 die Wärmeaustauschfläche 7 des Nachkühlers 5 mit dem zweiten Speisewasservorwärmer 20.2 des Hochdruckteiles 18 des Abhitzekessels 9. Über eine durch ein Ventil absperrbare Bypassleitung 41 können vorteilhafterweise die Wärmetauscherflächen 6, 7 in dem Zwischenkühler 3 und in dem Nachkühler 5 im Bedarfsfalle umgangen werden, wodurch das Speisewasser direkt von dem ersten Speisewasservorwärmer 20.1 in den zweiten Speisewasservorwärmer 20.2 des Hochdruckteiles 18 gelangt.

In der in Fig. 1 dargestellten Anlage wird durch die beschriebene Schaltung der am Wärmetausch beteiligten Flächen die in dem Zwischenkühler 3 und in dem Nachkühler 5 anfallende Abwärme auf das Speisewasser übertragen, das mit Hilfe einer Hochdruckspeisewasserpumpe 40 über die Wärmetauscherflächen 6, 7 der Kühler 3, 5 in den Hochdruckteil des Abhitzekessels 9 und der Dampfturbine 10 einspeist wird. Durch die Nutzung der Abwärmen der Verdichter 1, 2 kann die elektrische Leistung der Dampfturbine bei gleichem Brennstoffeinsatz um etwa 25 % gesteigert werden.

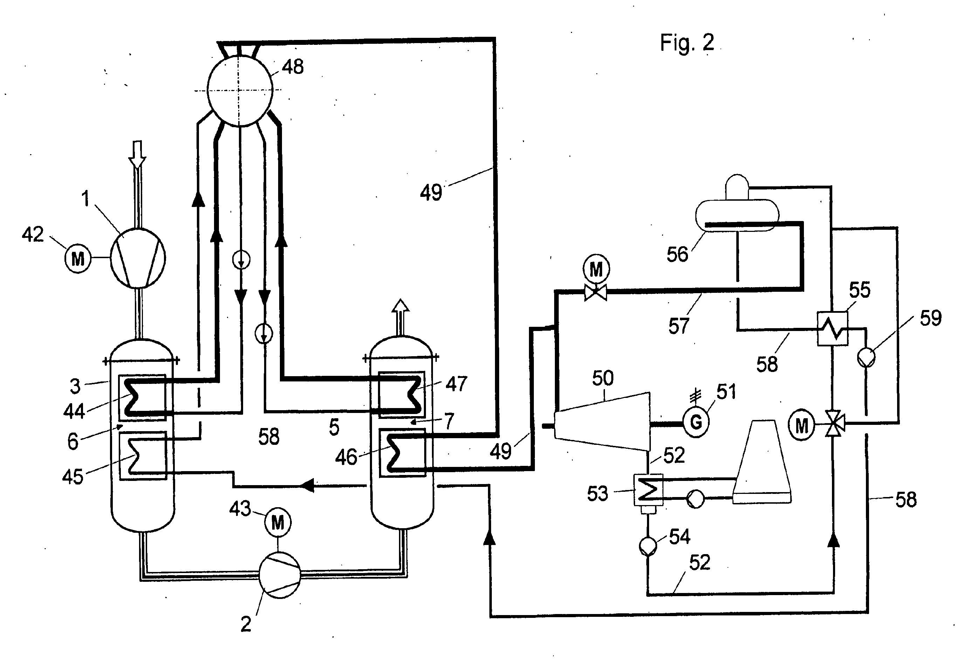

Werden die Verdichter 1, 2 zur Verdichtung eines Gases elektromotorisch angetrieben, so lässt sich die über die Kühler 3, 5 abgeführte Abwärme der Verdichter 1, 2 mit Hilfe des in Fig. 2 gezeigten Wasser-Dampf-Kreislaufes eines Niederdruckdampferzeugers gemäß der Erfindung nutzbringend verwerten. Die Verdichter 1, 2 sind jeweils mit einem Elektromotor 42, 43 oder hintereinander geschaltet mit einem einzigen Elektromotor als Antrieb verbunden. Im Gasstrom zwischen den beiden hintereinander geschalteten Verdichtern 1, 2 oder Verdichterstufengruppen liegt wiederum der Zwischenkühler 3 und in der zu einem Endverbraucher führenden Leitung 4 ist der Nachkühler 5 angeordnet. Die Wärmetauscherflächen 6, 7 der Kühler 3, 5 sind als Heizflächen eines druckaufgeladenen Niederdruckdampferzeugers geschaltet, wodurch wegen der hier vorliegenden hohen Wärmestromdichten bevorzugterweise Zwangumlaufverdampfer zur Anwendung kommen.

In dem Zwischenkühler 3 sind, in Strömungsrichtung des Gases gesehen, ein erster, als Zwangumlaufverdampfer ausgebildeter Verdampfer 44 und ein Speisewasservorwärmer 45 angeordnet. In dem Nachkühler 5 sind, in Strömungsrichtung des Gases gesehen, ein Überhitzer 46 und ein zweiter, als Zwangumlaufverdampfer ausgebildeter Verdampfer 47 angeordnet. Die beiden Verdampfer 44, 47 stehen mit einer Dampftrommel 48 in Verbindung. Der Dampferzeuger kann auch als Zwangdurchlaufdampferzeuger ausgebildet sein. Im Falle von Zwanglaufverdampfern kann die Dampftrommel 48 durch eine Abscheiderflasche ersetzt werden.

Der Überhitzer 46 ist eingangsseitig mit dem Dampfraum der Dampftrommel 48 und ausgangsseitig über eine Dampfleitung 49 mit der Eintrittseite einer Dampfturbine 50 verbunden. Die Dampfturbine 50 treibt in diesem Beispiel einen Generator 51 zur Energieerzeugung an.

An den Ausgang der Dampfturbine 50 ist über eine Kondensatleitung 52 ein Kondensator 53 angeschlossen. Die Kondensatleitung 52, in der eine Kondensatpumpe 54 angeordnet ist, ist über einen Wasser/Wasser-Wärmetauscher 55 zu einem Entgaser 56 geführt. Von der Dampfleitung 49 ist vor deren Eintritt in die Dampfturbine 50 eine Dampfzweigleitung 57 abgezweigt und zu dem Entgaser 56 geführt.

An den Entgaser 56 ist eine Speisewasserleitung 58 mit einer Speisewasserpumpe 59 angeschlossen. Die Speisewasserleitung 58 ist durch den Wasser/Wasser-Wärmetauscher 55 hindurchgeführt und mit dem Eingang des Speisewasservorwärmers 45 verbunden.

Während bei der in Fig. 1 dargestellten Anlage durch die Verwendung des Hochdruckspeisewassers als Kühlmedium die Wärmeauskopplung auf der Hochdruckseite des Dampferzeugers erfolgt, geschieht dies bei der Anlage gemäß Fig. 2 durch die Komponenten eines Niederdruckdampferzeugers, wie Überhitzer, Verdampfer und Speisewasservorwärmer. Bei motorisch angetriebenen Verdichtern erfolgt damit die Wärmeauskopplung auf Dampfbasis über Niederdrucksysteme. Der erzeugte Dampf wird dabei in einer eigens dafür konzipierten Niederdruckdampfturbine, wie in Fig. 2 dargestellt, zur Stromerzeugung genutzt oder auf die Niederdruckseite einer vorhandenen Dampfturbine geführt. Daneben kann der erzeugte Dampf für die Bereitstellung von Fernwärme, Prozessdampf und Brennstoffvorwärmung genutzt werden.

## Patentansprüche

1. Vorrichtung zur Ausnutzung der Abwärme von mehreren hintereinander geschalteten Verdichtern (1, 2) oder Verdichterstufengruppen zur Verdichtung eines Gases mit einem Zwischenkühler (3), der im Gasstrom jeweils zwischen zwei Verdichtern (1, 2) oder zwei Verdichterstufengruppen angeordnet und mit Wärmetauscherflächen (6) versehen ist, wobei die Wärmetauscherflächen (6) mit einem einen Speisewasservorwärmer (45), mehrere Verdampfer (44, 47), einen Überhitzer (46), einen Kondensator (53), einen Entgaser (56) und eine Speisewasserpumpe (59) aufweisenden Dampferzeuger für eine einen Generator (51) antreibende Dampfturbine (50) verbunden sind, wobei dem letzten Verdichter (2) ein Nachkühler (5) nachgeschaltet ist und wobei die Wärmetauscherflächen (6) des Zwischenkühlers (3) und Wärmetauscherflächen (7) des Nachkühlers (5) mit der Speisewasserpumpe (59) des Dampferzeugers in Verbindung stehen; und wobei
in dem Zwischenkühler (3) als wärmetauscherfläche (6) der Speisewasservorwärmer (45) und ein erster der Verdampfer (44) und in dem Nachkühler (5) als Wärmetauscherfläche (7) ein zweiter der Verdampfer (47), der mit dem ersten der Verdampfer (45) über eine Flasche oder eine Dampftrommel (48) parallel geschaltet ist, sowie der Überhitzer (46) eines druckaufgeladenen Niederdruck-Dampferzeugers angeordnet sind.

## Claims

1. A device for utilizing the waste heat of more series-connected compressors (1, 2) or compressor stage groups for compressing a gas with an intercooler (3), an intercooler arranged in the gas flow between two compressors (1, 2) or two compressor stage groups, said intercooler having heat exchanger surfaces (6), the heat exchanger surfaces (6) being operatively connected to a steam generator, said steam generator having a feedwater preheater (45), several evaporators (44, 47), a superheater (46), a condenser (53), a degasser (56) and a feedwater pump (59) for a steam turbine driving
a generator, wherein an aftercooler (5) is arranged downstream of the last compressor (2) and wherein the heat exchanger surfaces (6) of the intercooler (3) and the heat exchanger surfaces (7) of the aftercooler (5) are being operatively connected
with the feedwater pump (59) of the steam generator; and wherein said feedwater preheater (45) and a first of the evaporators (44) are arranged in the intercooler (3) as a part of the heat exchanger surfaces (6) and another one of the evaporators (45) is connected in parallel with the first of the evaporators (45) via a cylinder or a steam collection drum (48), as well as the superheater (46) forming a part of a supercharged low-pressure steam generator arranged as a part of the aftercooler (5) as heat exchange surface (7).

## Revendications

1. Dispositif pour récupérer la chaleur dégagée par plusieurs compresseurs (1, 2) en série ou plusieurs groupes d'étage de compression pour comprimer un gaz comportant un radiateur intermédiaire (3) installé dans la veine de gaz, entre deux compresseurs (1, 2) ou deux groupe d'étage de compression et ayant des surfaces d'échange de chaleur,
- les surfaces d'échange de chaleur (6) étant reliées à un générateur de vapeur comportant un préchauffeur d'eau d'alimentation (45), plusieurs évaporateurs (44, 47), un surchauffeur (46), un condenseur (53), un dégazeur (56) et une pompe d'eau d'alimentation (59) pour une turbine à vapeur (50) entraînant un générateur (51),
- le dernier compresseur (2) étant suivi d'un radiateur aval (5), et
- les surfaces d'échange de chaleur (6) du radiateur intermédiaire (3) et les surfaces d'échange de chaleur (7) du radiateur aval (5) étant en liaison avec la pompe d'eau d'alimentation (59) du générateur de vapeur, et
- dans le radiateur intermédiaire (3), la surface d'échange de chaleur (6) est constituée par le préchauffeur d'eau d'alimentation (45) et le premier des évaporateurs (44) et dans le radiateur aval (5), la surface d'échange de chaleur (7) est formée par le montage en parallèle du second évaporateur (47) avec le premier évaporateur (45) par une surface ou un tambour de vapeur (48), et le surchauffeur (46) d'un générateur de vapeur basse pression avec relevage de la pression.
